Europäisches Patentamt

European Patent Office

Office européen des brevets

(19)

(11) Veröffentlichungsnummer: **0 157 840**
**B1**

(12) **EUROPÄISCHE PATENTSCHRIFT**

(45) Veröffentlichungstag der Patentschrift:
21.06.89

(21) Anmeldenummer: 84903634.8

(22) Anmeldetag: 05.10.84

(86) Internationale Anmeldenummer:
PCT/EP 84/00310

(87) Internationale Veröffentlichungsnummer:
WO 85/01417 (11.04.85 Gazette 85/09)

(51) Int. Cl.⁴: **A 01 B 45/00,** A 01 C 5/06,
A 01 B 49/06

(54) VORRICHTUNG ZUR HERSTELLUNG PARALLELWANDIGER RILLEN IN GRÜNLAND UND RASENFLÄCHEN.

(30) Priorität: 06.10.83 DE 3336455

(43) Veröffentlichungstag der Anmeldung:
16.10.85 Patentblatt 85/42

(45) Bekanntmachung des Hinweises auf die Patenterteilung:
21.06.89 Patentblatt 89/25

(84) Benannte Vertragsstaaten:
AT BE FR GB SE

(56) Entgegenhaltungen:
DE-A-2 734 803
DE-A-3 239 469
DE-C-963 561
US-A-1 374 632
US-A-1 857 749
US-A-4 059 161

(73) Patentinhaber: A.J. Tröster GmbH & Co.KG, D-6308 Butzbach (DE)

(72) Erfinder: ORTH, Günter, Kapellenweg 19, D-5245 Birken/Sieg (DE)

(74) Vertreter: Schlagwein, Udo, Dipl.- Ing., Anwaltsbüro Ruppert & Schlagwein Frankfurter Strasse 34, D-6350 Bad Nauheim (DE)

EP 0 157 840 B1

### Beschreibung

Die Erfindung bezieht sich auf eine Vorrichtung der im Oberbegriff des Patentanspruchs 1 angegebenen Gattung. Eine solche Vorrichtung ist aus der DE-A-2 734 803 bekannt. Die hier beschriebene Vorrichtung dient zum Preparieren und Regenerieren abgewirtschafteter Rasenflächen und zum Einbringen von Saatgut. Zu diesem Zweck sind Messerscheiben vorgesehen, die paarweise jeweils eine Rinne in den Boden schneiden, in die dann das Saatgut abgelegt wird. Die Messerscheiben eines jeden Paares sind im Winkel derart schräg zueinander angestellt, daß sich eine im Querschnitt keilförmige Rille ergibt. Daraus resultiert, daß die bekannte Maschine nach dem sogenannten Schlitz-Saatverfahren arbeitet, wobei die Grasnarbe lediglich aufgeschnitten und auseinandergequetscht wird, wobei eine nachfolgende Walze den Schlitz wieder zudrückt, damit eine Abdeckung der ausgesäten Körner erfolgen kann.

Durch die DE-C-963 561 ist eine Bodenfräse mit einem trommelartig umlaufenden Organ bekannt, das über seinen Umfang nach außen vorstehende Werkzeuge aufweist, die Erdreich aus den eingeschnittenen Rillen ausheben, wobei die Werkzeuge jeweils von paarweise einander gegenüberliegenden Messerklingen gebildet werden, die bei der Rotation der Trommel Schlitze veränderbarer Tiefe in den Boden schneiden, wobei zwischen den in den Boden eintretenden Messerklingen auf dem Boden Kufen abgestützt sind, die vom Maschinenrahmen getragen werden.

Es ist ferner durch die US-A-1 374 632 ein durch Hand bedienbares Pflanzgerät bekanntgeworden, welches zum Furchenziehen auf dem Boden entlanggleitende und in diesen eindringende Messer aufweist, wobei Abdeckklingen oder Abdeckkufen von oben her federnd abgestützt auf den Boden einwirken.

Es ist ferner aus der US-A-4 059 161 eine Ackerfräsmaschine bekannt, die einen vom Schlepper gezogenen Rahmen aufweist, in dem mehrere Messerscheibenpaare vorgesehen sind, die in den Erdboden eindringen, an denen stabartige Körper befestigt sind, die die Abnutzung der Messerscheiben verringern sollen. Die Messerscheiben eines Paares sind jeweils gegeneinander schräg gestellt. Die Messerscheiben werden beim Ablaufen auf dem Boden von der Zapfwelle des Traktors her angetrieben.

Der Erfindung liegt die Aufgabe zugrunde, eine gattungsgemäße Vorrichtung weiter derart zu verbessern, daß eine noch bessere Anpassung an verschiedene Bodentypen, unterschiedliche Feuchtigkeitsverhältnisse, sehr stark wechselnde Narbendichte, fehlende Ebenflächigkeit und andere Faktoren gewährleistet wird.

Gelöst wird die gestellte Aufgabe durch die im Kennzeichnungsteil des Patentanspruchs 1 angegebenen Merkmale.

Weitere zweckmäßige Ausgestaltungen der Erfindung ergeben sich aus den Unteransprüchen.

Nachstehend werden Ausführungsbeispiele der Erfindung anhand der Zeichnung beschrieben. In der Zeichnung zeigen:

Fig. 1    eine Seitenansicht einer gemäß der Erfindung ausgebildeten Vorrichtung zur Herstellung parallelwandiger Rillen im Boden;

Fig. 2    einen Schnitt nach der Linie II - II gemäß Fig. 1;

Fig. 3    eine Einzelheit der in Fig. 1 dargestellten Vorrichtung;

Fig. 4    in größerem Maßstab eine Teilansicht einer Messerscheibe;

Fig. 5    eine Teilansicht einer abgewandelten Ausführungsform.

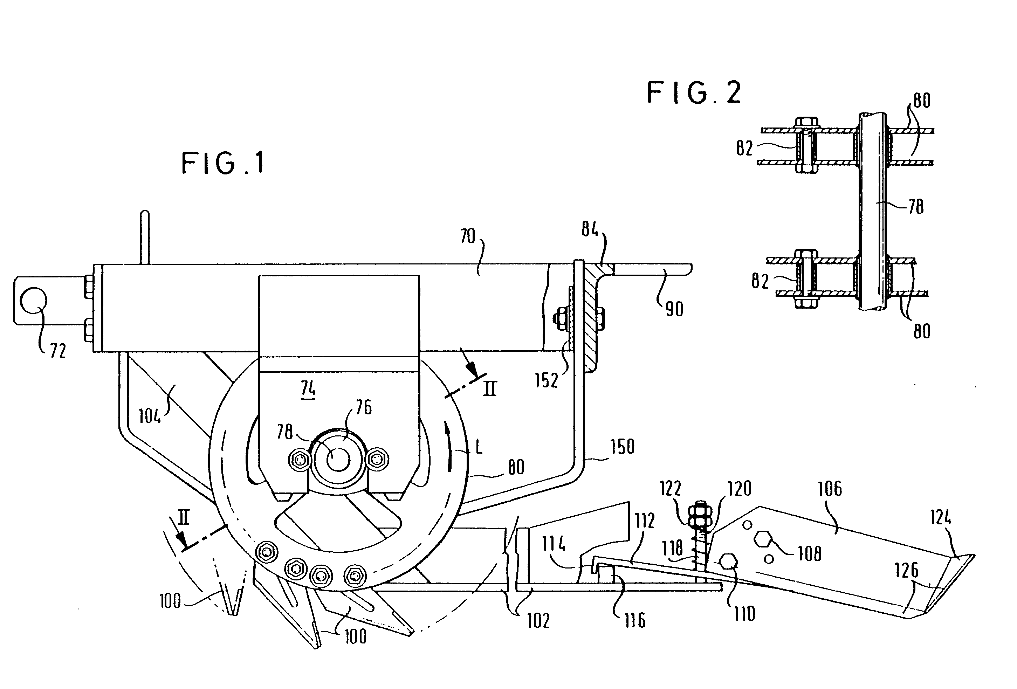

Bei dem Ausführungsbeispiel gemäß Fig. 1 ist ein Werkzeugträgerrahmen 70 vorgesehen, der über ein Scharnier 72 an dem nicht dargestellten Maschinenrahmen um eine horizontale Achse schwenkbar angelenkt ist. Der Maschinenrahmen trägt nebeneinander mehrere derartige Werkzeugträgerrahmen 70, deren Zahl sich nach der Arbeitsbreite der Maschine richtet. Die Achsen der Scharniere 72 der verschiedenen Werkzeugträgerrahmen 70 fluchten. Die Rahmen 70 können zur Veränderung des Rillenabstandes in ihren Scharnieren gegeneinander verschoben werden und es können in der Zahl unterschiedliche Werkzeugträgerrahmen 70 je nach Rillenabstand und Maschinenbreite angeordnet werden. Der nicht dargestellte Maschinenrahmen kann seinerseits am Zugfahrzeug höhenverstellbar angelenkt sein, so daß die Stellung der Werkezugträgerrahmen 70 verändert werden kann. Zwischen zwei von den Seitenholmen des Rahmens 70 nach unten geführten Lagerschilden 74 wird über Kugellager 76 eine Welle 78 gelagert, auf die Messerträgerscheiben 80 drehfest aufgesetzt sind, von denen jeweils zwei über Abstandshalter 82 verbunden sind, die die Rillenbreite bestimmen. Der Abstand der Messerscheibenpaare auf der Kelle 78 bestimmt den Rillenabstand.

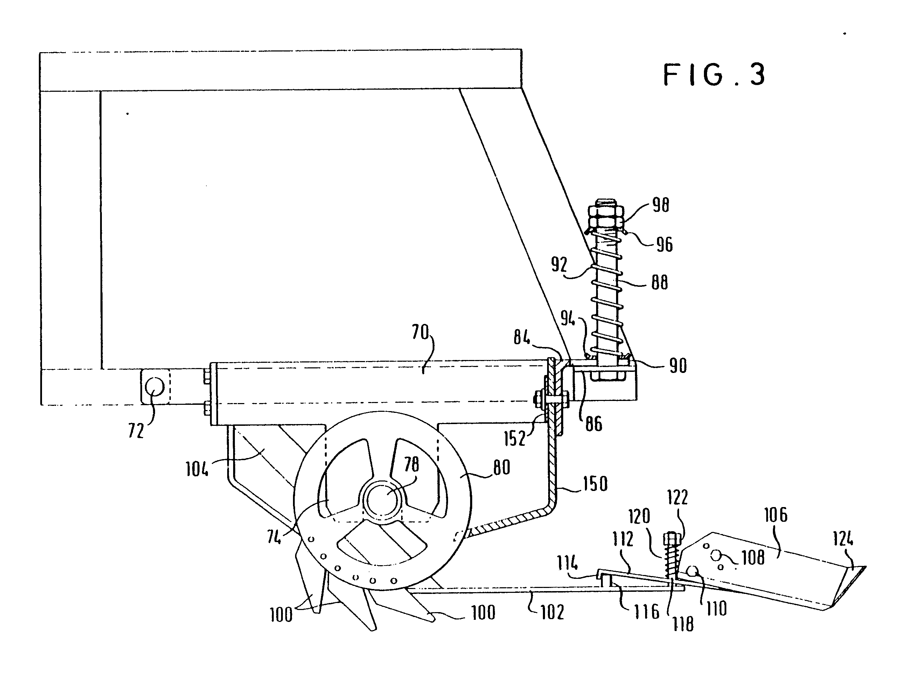

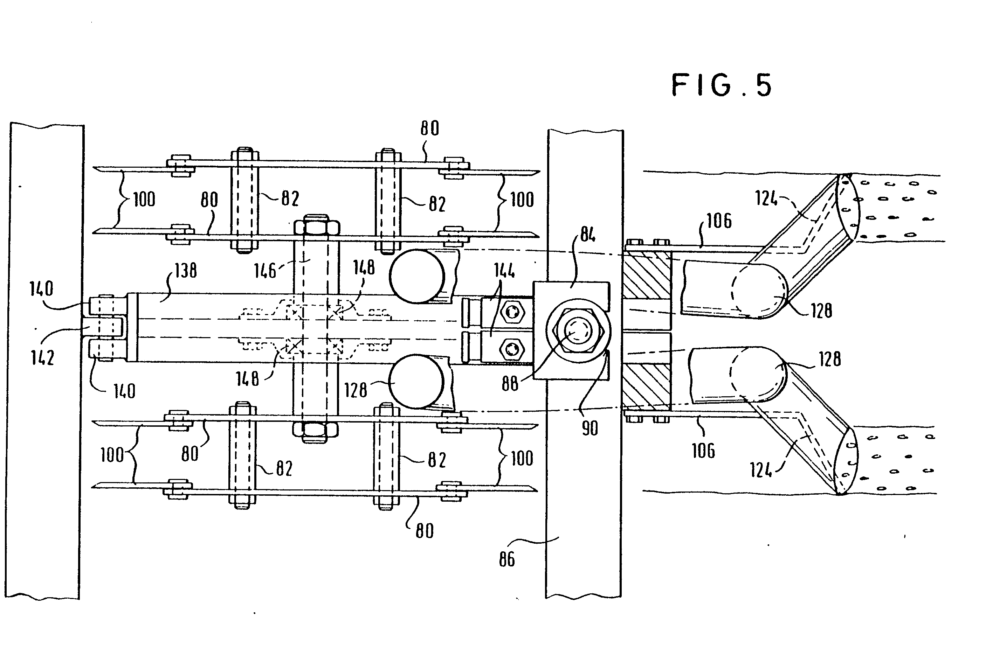

Wie aus Fig. 3 ersichtlich, liegt der Werkzeugträgerrahmen 70 mit seinem nach hinten weisenden Winkelstück 84 auf einem Träger 86 des Hauptmaschinenrahmens auf. An diesem Träger ist ein nach oben weisender Bolzen 88 befestigt, der durch einen Schlitz 90 oder eine Bohrung des Winkelstückes 84 durchsteht und eine Schraubenfeder 92 trägt, die beidseitig über Federteller 94 bzw. 96 abgestützt ist. Der untere Federteller 94 liegt auf dem Winkelstück 84, und der obere Federteller 96 wird von einer Mutter 98 abgestützt, die auf den Schraubbolzen 88 aufgeschraubt ist. Auf diese Weise wird der Werkezugträgerrahmen 70 elastisch gegenüber dem Hauptmaschinenrahmen abgestützt, d. h. jeder

einzelne Rahmen 70 kann beim Auftreffen auf erhöhte Widerstände um das Scharnier 72 nach oben ausschwenken, wobei die Feder 92 zusammengepreßt wird. Somit kann jeder einzelne Werkzeugträgerrahmen 70 mit seinen beiden Messerscheibenpaaren sowohl auftretenden Hindernissen als auch kurzen Bodenwellen ausweichen.

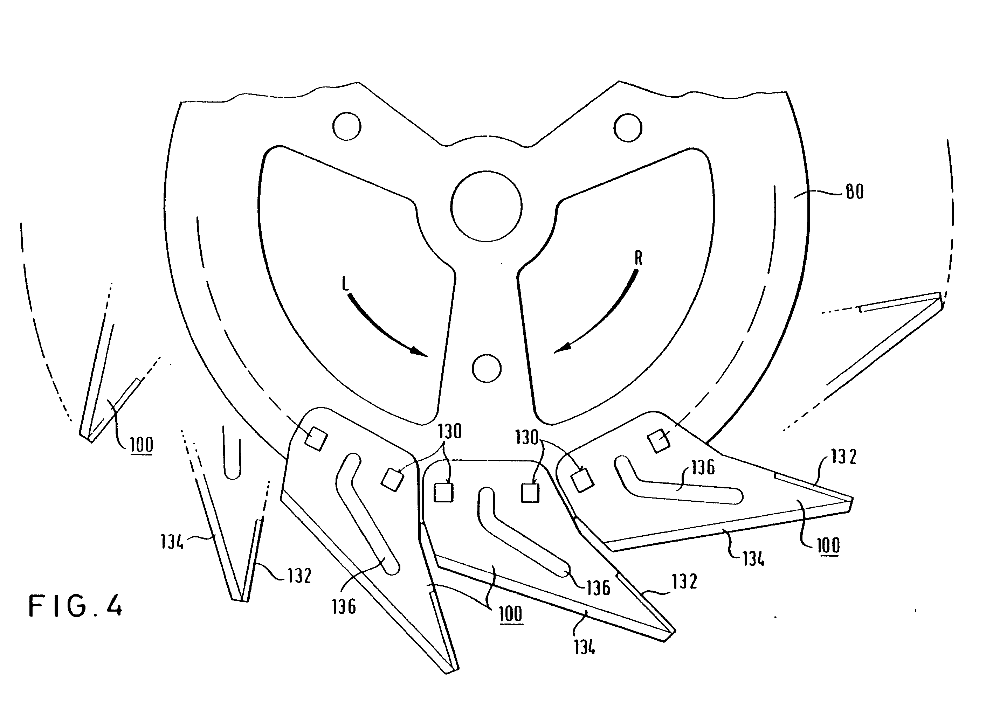

Am Umfang der Messerscheiben 80 sind Messerklingen 100 eingesetzt, die im einzelnen in Verbindung mit Fig. 4 beschrieben werden.

Am Werkezugträgerrahmen 70 sind zwei Kufen 102 aufgehängt, die zwischen den Messerscheiben 80 eines jeden Paares federnd auf dem Boden abgestützt sind. Die Aufhängung dieser Kufen 102 erfolgt über Trägerelemente 104. Diese Kufen tragen an ihrem hinteren Ende je eine Kappschar 106. Diese Kappschare 106 sind mittels zweier Bolzen 108 bzw. 110 an dem hinteren abgewinkelten Ende eines Zwischenstücks 112 angeschraubt. Dieses ruht mit seiner vorderen Mitnehmerkralle 114 auf einem auf der Kufe 102 aufgeschweißten Lagerbock 116. Ein mit der Kufe 102 fest verbundener Bolzen 118 steht von der Kufe durch ein Loch des Zwischenstückes 112 nach oben vor und trägt eine Druckschraubenfeder 120, die sich einerseits gegen das Zwischenstück 112 und andererseits gegen eine auf den Bolzen aufgeschraubte Mutter 122 abstützt. Auf diese Weise sind die Kappschare 106 zusätzlich nochmals in vertikaler Richtung abgefedert.

Gemäß Fig. 1 ist der Bolzen 108 durch eine mittleres von drei auf gleichem Radius zur Achse des Bolzens 110 liegenden Löchern geführt, wodurch sich eine Mittelstellung für die Kappschar 106 ergibt. Wird der Bolzen 108 durch das untere Loch geführt, wird der Neigungswinkel der Kappschar verringert, wenn er durch das obere Loch geführt wird, ergibt sich eine noch stärkere Neigung. Das hintere Ende der Kappschar weist eine in einem Winkel von 70° gegenüber der Schar 106 verlaufende Abwinkelung 124 auf, die ebenso wie die Schar mit einer Schneidkante 126 versehen ist. Die Schneidkante 126 der Abwinklung 124 ist in der aus Fig. 1 ersichtlichen Weise abgeschrägt. Die Kappscharen sind so angeordnet, daß sie mit dem Zwischenraum zwischen den Messerscheiben der Messerpaare fluchten. Sie dienen dazu, die hergestellten Rillen zu säubern und gegebenenfalls zu begradigen, um sie für das Einführen des Saatgutes freizuhalten. Um ein Verstopfen zu verhindern und einen möglichst großen Freiraum zwischen den Kappscharen zu schaffen, sind die Kappschare zweckmäßigerweise gestaffelt angeordnet, indem die Länge benachbarter Kufen 102 unterschiedlich bemessen wird.

Hinter den Kappscharen 106 sind Saatröhren 128 (Fig. 5) angeordnet, die das Saatgut aus einem nicht dargestellten Behälter in die hergestellten Rillen gelangen lassen. Hinter diesen Saatröhren sind entweder Zustreichbleche oder Federzinken angeordnet, die für das Abdecken der Saat Sorge tragen.

Wie insbesondere aus Fig. 4 ersichtlich, ist jede Messerklinge 100 im wesentlichen in Form eines spitzwinkligen Dreiecks ausgebildet. Über zwei Befestigungslöcher 130 ist jede Messer klinge 100 am Umfang der Messerträgerscheibe 80 befestigt, und jede Messerklinge 100 weist eine steile Messerflanke 132 und eine flache Messerflanke 134 auf. Die Flanke 134 weist gegenüber der Tangente der Messerscheibe einen kleinen Winkel auf, und die Flanke 132 einen größeren Winkel. Der die Schneiden einschließende Winkel beträgt etwa 75 bis 80°.

Die Messerklinge ist durch eine Sicke 136 versteift Ein Abschnitt der nachlaufenden Schneidflanke kann durch eine rechtwinklig nach innen abgebogene schaufelartige Räumkante ersetzt werden. Wenn sich die Messerscheiben in Richtung des Pfeiles R gemäß Fig. 4 drehen, dann kann es die Schneidkante 132 sein, die eine nach innen weisende Räumkante aufweist. In der Darstellung gemäß Fig. 1, wo der Schlepper an der linken Seite angreift, rollt die Vorrichtung von rechts nach links ab, d. h. die Messerscheiben drehen sich in Richtung des Pfeiles L. Hierdurch kommen die Messerklingen mit ihrer steilen Flanke 132 und ihrer Spitze mit dem Boden in Eingriff. Diese Abrollrichtung ist besonders für harten Boden geeignet, weil hier bei gleicher Belastung ein tieferer Einschnitt erzielt werden kann. Die Messerscheiben können jedoch auch so montiert werden, daß die Messerscheiben in Richtung des Pfeiles R abrollen. Dann dringen die Messerklingen mit ihrer flachen Flanke 134 in das Erdreich ein, und diese Drehrichtung ist zweckmäßig, wenn weicher Boden bearbeitet werden soll.

Fig 5 zeigt ein abgewandeltes Ausführungsbeispiel-Hierbei ist der Werkzeugträgerrahmen 70 gemäß Fig. 1 und 3 ersetzt durch einen Trägerbalken 138, der über Augen 140 an einem Lager 142 des Maschinenrahmens angelenkt ist. Dieser Trägerbalken 138 weist wiederum ein Winkelstück 84 mit einem Schlitz 90 auf, der einen Bolzen 88 umschließt, der wie bei dem Ausführungsbeispiel nach Fig. 3 eine Schraubenfeder trägt, wodurch der Balken 138 federnd gelagert wird. Der Trägerbalken 138 haltert längsverschieblich zwei Kufen 144, die an ihrem hinteren Ende über je ein Lager je eine Kappschar 106 tragen, deren abgewinkelte Enden 124 mit dem Zwischenraum zwischen zwei Messerscheiben je eines Messerscheibenpaares fluchten. Diese Messerträgerscheiben 80, die wiederum über Distanzstücke in ihren gegenseitigen Abstand festgelegt sind, werden in diesem Falle von einer Welle 146 getragen, die in einem Kugellager 148 gelagert ist, das in dem Trägerbalken 138 eingefügt ist. Durch unterschiedlich lange Wellen 146 oder unterschiedlich lange Distanzrohre, die auf der Welle 146 aufgezogen sind, kann der gegenseitige Abstand der Messerscheibenpaare eingestellt werden

Die im Bodeneingriff verstellbaren Kappschare 106 haben die Aufgabe eines den Messerklingen zugeordneten Räumwerkzeuges, das je nach Zustand der einzusäenden Fläche verschiedene Aufgaben zu erfüllen hat:

1. Bei dichten Grünlandnarben kommt der Kappschar die Aufgabe zu, die von den Messerklingen hinterlassene zackenförmige Saatrille entweder zu nivellieren, oder die sich aus der Zahnrille ergebenden Spitzen wegzuschneiden, um zu starke Höhenunterschiede In der Zahnrille zu verhindern.

2. Bei der Direkteinsaat auf unbearbeiteten Ackerflachen begrenzen die Messerklingenpaare zuerst die Saatrille, und die nachfolgende Kappschar räumt das Saatbett in der gewünschten Tiefe aus.

Bei der Einssat von Getreidearten schaffen die Messerklingen ebenfalls eine seitliche Abgrenzung der Rille, während die Kappschare hauptsächlich die Aufgabe haben, eine entsprechend breite Sohle für die gleichmäßig tiefe Ablage des Saatgutes zu schaffen.

Das Saatgut selbst wird über den Saatkasten einer herkömmlichen Sämaschine den jeweiligen Saatröhren 128 zugeführt, die lediglich in Fig. 5 angedeutet sind. Diese Saatröhren legen entweder einzeln hinter den Kappscharen das Saatgut ab, oder sie sind als Doppelrohr in Fluchtlinie hinter den Kufen angeordnet und erst kurz über den Kappscharen deltaförmig auseinandergeführt, um das Saatgut in die beiderseitig von der Kufe verlaufenden Saatrillen einzuführen.

Zwischen zwei Messerträgerscheiben kann, wie aus Fig. 1 ersichtlich, ein Räumeisen 150 vorgesehen sein, das am Rahmen 70 höhenverstellbar mittels einer Klemmplatte 152 festlegbar ist. Dieses Räumeisen 150 hat die Aufgabe, die Messerklingen von anhaftendem Erdreich freizuhalten.

**Patentansprüche**

1. Vorrichtung zur Herstellung parallelwandiger Rillen in Grünland und Rasenflächen, auf deren Grund Samen abgelegt werden, mit einem trommelartig umlaufenden organ (80), das über seinen Umfang nach außen vorstehende Werkzeuge (100) aufweist, die das Erdreich aus den Rillen ausheben, wobei die Werkzeuge jeweils von paarweise einander gegenüberliegenden Messerklingen (100) gebildet werden, die beim Abrollen der Trommel Schlitze fortlaufend veränderter Tiefe in den Boden schneiden, wobei zwischen den in den Boden eindringenden Messerklingen (100) auf dem Boden Kufen (102; 144) abgestützt sind, die vom Maschinenrahmen getragen werden, dadurch gekennzeichnet, daß das hintere Ende der kufen Kappschare (106) trägt, die auf die gebildeten Rillen zwischen zwei Messern eines Paares ausgerichtet sind, daß die Kufen und/oder die Kappschare (106) in vertikaler Richtung federnd und hinsichtlich des Eingriffswinkels verstellbar aufgehängt sind, und daß mit einem Saatgutbehälter in Verbindung stehende Saatröhren (128) vorgesehen sind, deren Austragsende auf die Messerklingen (100) eines Paares bzw. den von diesem gebildeten Schlitz ausgerichtet sind, wobei zweckmäßig das Austragsende der Saatröhren (128) in Fahrtrichtung hinter den Kappscharen (106) liegt und am hinteren Ende der Kufen (144) zwischen diesen zwei Saatröhren (128) zusammenlaufen, die hinter den Kappscharen (106) deltaförmig auf die Schlitze ausgerichtet auseinanderlaufen.

2. Vorrichtung nach Anspruch 1, dadurch gekennzeichnet, daß die Kappschare (106) in Vertikalrichtung federnd am hinteren Ende der Kufe (102) angelenkt sind.

3. Vorrichtung nach Anspruch 2, dadurch gekennzeichnet, daß die Kappschare (106) einzeln über ein schwenkbares Zwischenstück (112) mit einer Mitnehmerkralle (114) und einer Druckfeder (120) vertikal gegen Federdruck schwenkbar angeordnet sind.

4. Vorrichtung nach Anspruch 3, dadurch gekennzeichnet, daß die Kappschare (106) über ein variables Lochbild im Anstellwinkel gegenüber dem Boden einstellbar sind.

5. Vorrichtung nach einem der Ansprüche 1 bis 4, dadurch gekennzeichnet, daß die Federvorspannung zwischen den Werkzeugträgerrahmen und dem Maschinenrahmen einstellbar ist, wobei die Vorspannung einer Druckfeder (92) durch Kippen des gesamten Maschinenrahmens über die Längenverstellung des oberen Lenkers der Dreipunkt-Hydraulik des Zugfahrzeuges für alle Messerscheibenpaare zentral einstellbar ist.

6. Vorrichtung nach einem der Ansprüche 1 bis 5, dadurch gekennzeichnet, daß die Messerklingen (100) dreieckig gestaltet sind und eine steile Flanke (132) und eine flache Flanke (134) aufweisen, die zwischen sich einen spitzen Winkel einschließen, und daß an der steilen Flanke (132) eine nach innen rechtwinklig eingezogene Räumkante angeordnet ist.

7. Vorrichtung nach einem der Ansprüche 1 bis 6, dadurch gekennzeichnet, daß jeweils zwischen zwei Messerträgerscheiben (80) ein Räumeisen (150) rahmenfest mit dem Werkzeugträgerrahmen (70) verbunden ist, und daß die Räumeisen (150) mittels einer Klemmplatte (152) höhenverstellbar am Werkzeugträgerrahmen (70) festgelegt sind.

## Claims

1. Appliance for producing parallel-sided drills in grassland and turf-covered areas, seed being sown on the bottom surfaces of these drills, said appliance having an element (80) which rotates in a drum-like manner and carries outwardly projecting implements (100) at intervals around its periphery, these implements (100) in each case consisting of paired, oppositely located knife blades (100) which continuously cut variable-depth slits in the ground as the drum rolls over it, and which lift the soil from the drills, while at the same time machine-frame-mounted skids (102; 144) bear against the ground between the knife blades (100), characterized in that the rear ends of the skids carry trimming blades (106) which are aligned with the drills formed between the paired knives, in that the skids and/or the trimming blades (106) are suspended in a manner permitting them to deflect resiliently in the vertical direction and permitting the angle of attack to be adjusted, and in that seed tubes (128) are provided, these tubes communicating with a seed container and their delivery ends being aligned with a pair of knife blades (100) or, more specifically, with the slit formed by said blades, it being expedient for the delivery ends of the seed tubes (128) to be located to the rear of the trimming blades (106), as defined by the direction in which the appliance travels, and for two seed tubes (128) to run together between and at the rear ends of the skids (144), these seed tubes diverging rearwards of the trimming blades (106) in a delta shape, in line with the slits.

2. Appliance according to Claim 1, characterized in that the trimming blades (106) are articulated to the rear ends of the skids (102), in a manner permitting said blades to deflect resiliently in the vertical direction.

3. Appliance according to Claim 2, characterized in that the trimming blades (106) are independently mounted in a manner such that each can swing vertically against spring pressure, the mounting of said blades being via a tiltable intermediate piece (112) with an engagement claw (114) and a compression spring (120).

4. Appliance according to Claim 3, characterized in that the trimming blades (106) can be adjusted so as to alter their angle of incidence with respect to the ground, adjustment being effected by means of a pattern of selectable holes.

5. Appliance according to any one of Claims 1 to 4, characterized in that the spring preload between the implement-carrier frames and the machine frame is adjustable in that the preloading of a compression spring (92) is centrally adjustable, for all the knife-disc pairs, adjustment being effected by tilting the entire machine frame through the agency of the length-adjustment facility associated with the upper link rod of the three-point hydraulic linkage provided on the towing vehicle.

6. Appliance according to any one of Claims 1 to 5, characterized in that the knife blades (100) are of triangular configuration and present a high-inclination flank (132) and a low-inclination flank (134), these flanks enclosing an acute angle, and in that a clearing edge is provided on the high-inclination flank (132), this edge being drawn inwards at right-angles.

7. Appliance according to any one of Claims 1 to 6, characterized in that a cleaning bar (150) is rigidly connected to the implement-carrier frame (70) between each pair of knife-carrier discs (80), and in that the cleaning bars (150) are fixed to the implement-carrier frame (70) in a manner permitting vertical adjustment, fixing being effected by means of a clamping plate (152).

## Revendications

1. Dispositif pour former, dans des prairies et pelouses, des sillons à parois parallèles au fond desquels des graines sont semées, comportant un organe tournant du genre tambour (80) présentant des outils (100) qui font saillie vers l'extérieur sur son pourtour, enlèvent la terre des sillons et sont constitués chacun de lames (100) en vis-à-vis par paires, lesquelles, lorsque le tambour roule, découpent dans le sol des fentes dont la profondeur est modifiée de manière continue, des patins (102; 144) portés par le châssis de la machine prenant appui sur le sol, entre les lames pénétrant dans le sol, caractérise par le fait que l'extrémité arrière des patins porte des socs régularisateurs (106) qui sont alignés sur les sillons formés entre deux lames d'une paire, par le fait que les patins et/ou les socs régularisateurs (106) sont suspendus élastiquement en direction verticale, avec possibilité de réglage de leur angle d'attaque, et par le fait qu'il est prévu des tubes à semences (128) qui communiquent avec un réservoir à semences et ont leurs extrémités de sortie dirigées vers les lames (100) d'une paire ou vers la fente formée par celle-ci, l'extrémité de sortie des tubes à semences (128) se trouvant avantageusement derrière les secs régularisateurs (106), en considérant le sens du déplacement du dispositif, et deux tubes à semences (128) convergeant vers l'extrémité arrière des patins (144), entre ces derniers, pour diverger derrière les secs régularisateurs (106) en forme de delta vers les fentes.

2. Dispositif selon revendication 1, caractérisé par le fait que les socs régularisateurs (106) sont articulés, de manière élastique en direction verticale, sur l'extrémité arrière des patins (102).

3. Dispositif selon revendication 2, caractérisé par le fait que les socs régularisateurs (106) sont agences individuellement, avec possibilité de pivoter verticalement contre une poussée élastique, au moyen d'une pièce intermédiaire pivotante (112) avec une griffe d'entraînement (114) et un ressort de compression (120).

4. Dispositif selon revendication 3, caractérisé par le fait que les socs régularisateurs (106) sont réglables quant à leur angle d'attaque par rapport au sol, grâce à une pluralité de trous de positionnement.

5. Dispositif selon l'une des revendications 1 à 4, caractérisé par le fait que la précontrainte élastique entre le cadre porte-outils et le châssis de la machine est réglable, la précontrainte d'un ressort de compression (92) pouvant être réglée de manière centralisée, pour toutes les paires de disques porte-lames, par basculement de l'ensemble du châssis de la machine, grâce au réglage de longueur du bras supérieur du système hydraulique à trois points du véhicule tracteur.

6. Dispositif selon l'une des revendications 1 à 5, caractérisé par le fait que les lames (100) sont triangulaires et présentent un flanc à pente raide (132) et un flanc à faible pente (134), lesquels forment entre eux un angle aigu, et par le fait qu'une arête de raclage, rabattue à angle droit vers l'intérieur, est agencée sur le flanc à pente raide (132).

7. Dispositif selon l'une des revendications 1 à 6, caractérisé par le fait qu'il y a, à chaque fois entre deux plateaux porte-outils (80), une racle (150) solidarisée au cadre porte-outil (70), et par le fait que les racles (150) sont fixées au cadre porteoutils (70) de manière à être réglables en hauteur, au moyen d'une plaque de serrage (152).

FIG. 2

FIG. 1

FIG.3

EP 0 157 840 B1

FIG. 5

EP 0 157 840 B1

FIG.4

EP 0 157 840 B1